# EUROPÄISCHE PATENTANMELDUNG

(11) **EP 3 869 683 A1**
(43) Veröffentlichungstag der Anmeldung: **25.08.2021**
(21) Anmeldenummer: 20158538.7
(22) Anmeldetag: 20.02.2020
(51) Int. Cl.: H02M 7/56, H02M 7/60

(54) **MECHANISCHE VORRICHTUNG ZUR UMFORMUNG VON GLEICHSTROM IN WECHSELSTROM**

(71) Anmelder: Siemens Aktiengesellschaft, 80333 München (DE)
(72) Erfinder: Vollmer, Rolf, 36129 Gersfeld (DE)

(57) **Zusammenfassung**

Die Erfindung betrifft eine mechanische Vorrichtung (3) zur Umformung von Gleichstrom in Dreiphasenwechselstrom zum Antrieb einer dynamoelektrischen rotatorischen Maschine, aufweisend wenigstens eine Kontakteinheit mit wenigstens zwei Aufnahmebereichen (12, 13) zur Aufnahme von elektrischer Energie in Form von Gleichstrom und mit wenigstens drei Abgabebereichen (9, 10, 11) zur Abgabe elektrischer Energie in Form von Wechselstrom, wobei ein erster Aufnahmebereich zur Kontaktierung eines Pluspols einer Gleichstromspeisung ausgebildet ist, wobei ein zweiter Aufnahmebereich zur Kontaktierung eines Minuspols einer Gleichstromspeisung ausgebildet ist, wobei ein erster Abgabebereich zur Bereitstellung eines ersten Wechselstroms ausgebildet ist, wobei ein zweiter Abgabebereich zur Bereitstellung eines zweiten Wechselstroms ausgebildet ist, wobei ein dritter Abgabebereich zur Bereitstellung eines dritten Wechselstroms ausgebildet ist, und wenigstens eine Kontaktierungseinheit zur Aufnahme des Gleichstroms und/oder zur Abgabe des Wechselstroms. Die Erfindung betrifft ferner eine dynamoelektrische rotatorische Maschine mit einer derartigen Vorrichtung.

## Beschreibung

Die Erfindung betrifft eine mechanische Vorrichtung zur Umformung von Gleichstrom in Dreiphasenwechselstrom zum Antrieb einer dynamoelektrischen rotatorischen Maschine.

Ferner betrifft die Erfindung eine dynamoelektrische rotatorische Maschine mit einer derartigen mechanischen Vorrichtung.

Gleichspannungsnetze erfreuen sich in Industrienetzen zunehmender Beliebtheit. Eine Energieversorgung mit Gleichstrom bietet enormes Einsparpotential und eignet sich insbesondere für Antriebe in einer Produktion. Auch in Fahrzeugen, Robotern, Exoskeletten und sonstigen Batterienetzen steht zumeist nur eine Gleichspannung zur Verfügung.

Um eine dynamoelektrische rotatorische Maschine mit mehrphasiger Statorwicklung in einem Gleichspannungsnetz, auch als DC-Netz bezeichnet, betreiben zu können, werden elektronische Schaltungen verwendet, welche aus einer Gleichspannung eine mehrphasige Wechselspannung erzeugen. Dies ermöglicht eine Speisung einer mehrsträngigen Wicklung der dynamoelektrischen rotatorischen Maschine. Derartige elektronische Schaltungen sind besonders aufwendig und verlustbehaftet.

Da derartige elektronische Schaltungen zudem eine gewisse Komplexität aufweisen, liegt der Erfindung die Aufgabe zugrunde, die Komplexität bei der Umformung von Gleichstrom in Dreiphasenwechselstrom zum Antrieb einer dynamoelektrischen rotatorischen Maschine zu reduzieren.

Die Lösung der Aufgabe gelingt durch Anspruch 1, d.h. eine mechanische Vorrichtung zur Umformung von Gleichstrom in Dreiphasenwechselstrom zum Antrieb einer dynamoelektrischen rotoatorischen Maschine, aufweisend wenigstens eine Kontakteinheit mit wenigstens zwei Aufnahmebereichen zur Aufnahme von elektrischer Energie, in Form von Gleichstrom und mit wenigstens drei Abgabebereichen zur Abgabe elektrischer Energie in Form von Wechselstrom, wobei ein erster Aufnahmebereich zur Kontaktierung eines Pluspols einer Gleichstromspeisung ausgebildet ist, wobei ein zweiter Aufnahmebereich zur Kontaktierung eines Minuspols einer Gleichstromspeisung ausgebildet ist, wobei ein erster Abgabebereich zur Bereitstellung eines ersten Wechselstroms ausgebildet ist, wobei ein zweiter Abgabebereich zur Bereitstellung eines zweiten Wechselstroms ausgebildet ist, wobei ein dritter Abgabebereich zur Bereitstellung eines dritten Wechselstroms ausgebildet ist, und wenigstens eine Kontaktierungseinheit zur Aufnahme des Gleichstroms und/oder zur Abgabe des Wechselstroms.

Ferner gelingt die Lösung der Aufgabe durch eine dynamoelektrische rotatorische Maschine mit einer derartigen mechanischen Vorrichtung.

Eine dynamoelektrische rotatorische Maschine weist einen Rotor und einen Stator auf. Die Erfindung kann sowohl für permanenterregte oder elektrisch erregte Synchronmaschinen als auch für Reluktanzmaschinen angewendet werden.

Weitere vorteilhafte Ausführungen ergeben sich aus den Unteransprüchen.

In einer vorteilhaften Ausführungsform der Erfindung ist die Kontakteinheit auf eine Welle einer dynamoelektrischen rotatorischen Maschine aufsteckbar.

Dies bietet den Vorteil, dass eine vorhandene dynamoelektrische rotatorische Maschine mit mehrsträngiger, insbesondere dreisträngiger, Statorwicklung verwendet werden kann, da die mechanische Vorrichtung auf einfache Weise auf die Welle aufsteckbar ausgeführt ist.

In einer weiteren vorteilhaften Ausführungsform der Erfindung ist die mechanische Vorrichtung als Hohlzylinder ausgebildet. Dies hat den Vorteil, dass die mechanische Vorrichtung einerseits auf die Welle aufsteckbar ausgeführt werden kann und andererseits an Abmessungen der dynamoelektrischen rotatorischen Maschine angepasst werden kann.

In einer weiteren vorteilhaften Ausführungsform der Erfindung liegt der erste und/oder der zweite Aufnahmebereich auf wenigstens einer wenigstens im Wesentlichen konzentrisch um einen Mittelpunkt angeordneten Schleifbahn.

Dies ist vorteilhaft, da dadurch die Aufnahme elektrischer Energie in Zusammenhang mit einer Rotation des Rotors steht.

In einer weiteren vorteilhaften Ausführungsform der Erfindung liegt der erste und/oder der zweite und/oder der dritte Abgabebereich auf wenigstens einer wenigstens im Wesentlichen konzentrisch um den Mittelpunkt angeordneten Schleifbahn.

Dies ist vorteilhaft, da dadurch die Abgabe elektrischer Energie in Zusammenhang mit einer Rotation des Rotors steht.

In einer weiteren vorteilhaften Ausführungsform der Erfindung ist die Kontakteinheit als Scheibe ausgebildet.

Dies bietet mitunter den Vorteil einer kompakten Bauweise der dynamoelektrischen rotatorischen Maschine.

In einer weiteren vorteilhaften Ausführungsform der Erfindung liegt der erste Abgabebereich auf einer ersten Schleifbahn, der zweite Abgabebereich auf einer zweiten Schleifbahn und der dritte Abgabebereich auf einer dritten Schleifbahn.

In einer weiteren vorteilhaften Ausführungsform der Erfindung liegen der erste und der zweite Aufnahmebereich auf genau einer vierten Schleifbahn, wobei der erste Aufnahmebereich einem ersten Abschnitt der vierten Schleifbahn liegt, wobei der zweite Aufnahmebereich auf einem zweiten Abschnitt der vierten Schleifbahn liegt.

Vorteilhaft sind die Abschnitte, insbesondere eine Abschnittsgröße, von einer Polzahl p der Maschine abhängig. Beispielhaft kann angegeben werden: α = 120°/p

Die beschriebene Vorrichtung ist vorzugsweise als Schleifkontaktschalter ausgebildet.

In einer weiteren vorteilhaften Ausführungsform der Erfindung ist die Kontaktierungseinheit zur Verbindung mit der Welle der dynamoelektrischen rotatorischen Maschine ausgebildet und weist wenigstens drei Kontaktierungselemente auf, wobei ein erstes Kontaktierungselement bei Rotation der Welle der ersten Schleifbahn folgend ausgeführt ist, derart, dass das erste Kontaktierungselement den ersten Abgabebereich abwechselnd mit dem ersten Aufnahmebereich und mit dem zweiten Aufnahmebereich verbindet, wobei ein zweites Kontaktierungselement bei Rotation der Welle der zweiten Schleifbahn folgend ausgeführt ist, derart, dass das zweite Kontaktierungselement den zweiten Abgabebereich abwechselnd mit dem ersten Aufnahmebereich und mit dem zweiten Aufnahmebereich verbindet, wobei ein drittes Kontaktierungselement bei Rotation der Welle der dritten Schleifbahn folgend ausgeführt ist, derart, dass das dritte Kontaktierungselement den dritten Abgabebereich abwechselnd mit dem ersten Aufnahmebereich und mit dem zweiten Aufnahmebereich verbindet.

Dies hat den Vorteil, dass durch diese Ausführungsform die Gleichspannung durch eine Rotorposition gesteuert und über die Kontaktierungselemente zu einem festgelegten Winkel auf die mehrsträngige Statorwicklung geschaltet wird.

Beispielhaft gilt für einen Winkel α_{mech} zwischen zwei Strängen bei einer Anzahl der Stränge m: α_{mech} = αₑₗ/p, wobei αₑₗ =360°/m

Beispielhaft ist eine Anzahl der Abschnitte 2.p.

In einer weiteren vorteilhaften Ausführungsform der Erfindung liegt der erste Aufnahmebereich auf einer ersten Aufnahmeschleifbahn, wobei die erste Aufnahmeschleifbahn an einem Außenumfang der als Hohlzylinder ausgebildeten Kontakteinheit angeordnet ist, wobei der zweite Aufnahmebereich auf einer zweiten Aufnahmeschleifbahn liegt, wobei die zweite Aufnahmeschleifbahn an dem Außenumfang der Kontakteinheit angeordnet ist.

Dies ist vorteilhaft, da dadurch die Aufnahme elektrischer Energie in Zusammenhang mit einer Rotation des Rotors steht.

In einer weiteren vorteilhaften Ausführungsform der Erfindung ist der erste Abgabebereich und der zweite Abgabebereich und der dritte Abgabebereich auf genau einer Abgabeschleifbahn angeordnet, wobei die Abgabeschleifbahn an dem Außenumfang der als Hohlzylinder ausgebildeten Kontakteinheit angeordnet ist, wobei der erste Abgabebereich auf dem ersten Abschnitt der Abgabeschleifbahn liegt, wobei der zweite Abgabebereich auf einem zweiten Abschnitt der Abgabeschleifbahn liegt, wobei der dritte Abgabebereich auf einem dritten Abschnitt der Abgabeschleifbahn liegt.

Beispielhaft weisen die Abschnitte 120° elektrisch auf. Vorteilhaft gibt es 3·p Abschnitte am Umfang.

Eine derartige Ausführung eignet sich besonders für eine Reluktanzmaschine.

Der Rotor wird hierfür als Reluktanzrotor aufgebaut und weist somit unterschiedliche magnetische Leitwerte in der d- und q-Achse auf.

Der Gleichstrom wird vorzugsweise über feststehende Bürsten auf einen auf oder an dem Rotor befestigten Kommutator übertragen. Dort wird der Strom lagerichtig vorzugsweise über Bürsten auf die Statorwicklung übertragen. Die Maschine benötigt dadurch keine Rotorlagesensorik.

Dies hat den Vorteil, dass eine Reluktanzmaschine direkt an Gleichstromnetzen betrieben werden kann. Eine Maschine mit einem robustem Rotoraufbau, kompakten Abmessungen und einem günstigen Preis kann so direkt an einem Gleichstromnetz betrieben werden.

Die Reluktanzmaschine weist keine Wicklungen auf dem Rotor auf und umfasst vorzugsweise gestanzte Bleche. Dadurch entstehen auf dem Rotor weniger Verluste. Bei der Reluktanzmaschine liegt eine geringere Trägheit vor und sie ist kostengünstig. Der robuste Aufbau ermöglicht auch Anwendungen im Hochtemperaturbereich, z.B. bei Lüftern für Rauchgasentlüftung bzw. Frischluftüberdruck im Brandfall. Insbesondere bei diesen Anwendungen werden batteriegepufferte DC-Netze bevorzugt verwendet. Der Verzicht auf Umrichter einerseits und Lagesensoren in der Maschine andererseits sind gerade in solchen Anwendungen vorteilhaft.

In einer weiteren vorteilhaften Ausführungsform der Erfindung liegt der erste Abgabebereich auf einer ersten Abgabeschleifbahn und der zweite Abgabebereich auf einer zweiten Abgabeschleifbahn und der dritte Abgabebereich auf einer dritten Abgabeschleifbahn, wobei die erste Abgabeschleifbahn und die zweite Abgabeschleifbahn und die dritte Abgabeschleifbahn an dem Außenumfang der als Hohlzylinder ausgebildeten Kontakteinheit ausgeführt sind.

In einer weiteren vorteilhaften Ausführungsform der Erfindung ist der erste Abgabebereich in eine Mehrzahl von Abgabebereichsabschnitten unterteilt, wobei der zweite Abgabebereich in die Mehrzahl von Abgabebereichsabschnitten unterteilt ist, wobei der dritte Abgabebereich in die Mehrzahl von Abgabebereichsabschnitten unterteilt ist.

In einer weiteren vorteilhaften Ausführungsform der Erfindung entspricht die Mehrzahl der Abgabebereichsabschnitte einer Anzahl an Polen einer Statorwicklung der dynamoelektrischen rotatorischen Maschine, wobei ein erster Abgabebereichsabschnitt mit dem ersten Aufnahmebereich verbunden ist, wobei ein benachbarter zweiter Abgabebereichsabschnitt mit dem zweiten Aufnahmebereich verbunden ist.

Die beschriebene mechanische Vorrichtung in dieser Ausführungsform umfasst vorzugsweise mindestens einen Schleifkontakt für jede Phase und mindestens einen Schleifkontakt für jeden Pol der Gleichspannung, also bei einer Maschine mit dreiphasiger Statorwicklung mindestens fünf Schleifkontakte, vorzugsweise als Bürsten ausgeführt.

Vorzugsweise sind die Schleifkontakte als feststehende Bürsten ausgeführt und die mechanische Vorrichtung rotiert bei Rotation des Rotors mit dem Rotor. Die feststehenden Bürsten werden mit Vorspannung auf die zugeordneten Aufnahme- bzw. Abgabeschleifbahnen gedrückt, damit der Stromfluss optimal gewährleistet ist.

Die mechanische Vorrichtung ist in dieser Ausführungsform vorzugsweise zur Statorwicklung und/oder zum Rotor verdrehbar bzw. justierbar ausgeführt, damit die Phasen zur optimalen Rotorpostion mit Strom gespeist werden. Durch die Position der feststehenden Bürsten und die Anordnung der Schleifbahnen wird die optimale Stromeinspeisung in die mehrphasige Statorwicklung vorgegeben. Z.B. wird bei einer dreiphasigen Statorwicklung der Strom um 120°C elektrisch versetzt eingespeist.

Die Erfindung bietet den Vorteil, dass auf einen Einsatz von Gleichstrommaschinen verzichtet werden kann. Dadurch kann eine gute Entwärmung des Rotors und somit der Maschine bewerkstelligt werden, wohingegen bei Gleichstrommaschinen die Wicklung im rotierenden Maschinenteil sitzt und dadurch der Rotor schlechter entwärmt werden kann. Die Erfindung ermöglicht zudem eine höhere Drehzahlfestigkeit als bei Gleichstrommaschinen.

Im Folgenden wird die Erfindung anhand der in den Figuren gezeigten Ausführungsbeispiele näher beschrieben und erläutert. Es zeigen:
- FIG 1: eine dynamoelektrische rotatorische Maschine,
- FIG 2: eine erste Ausführung der mechanischen Vorrichtung,
- FIG 3: ein Resultat der Umformung von Gleichstrom in Dreiphasenwechselstrom,
- FIG 4: eine weitere Ausführung der mechanischen Vorrichtung,
- FIG 5: eine weitere Ausführung der mechanischen Vorrichtung,
- FIG 6: eine Ausführung einer internen Verschaltung der in FIG 5 gezeigten Ausführung der mechanischen Vorrichtung,
- FIG 7: eine Vorrichtung zur Unterdrückung von Bürstenfeuer bei hoher Strombelastung,
- FIG 8: die Vorrichtung aus FIG 7 in einer anderen Perspektive.

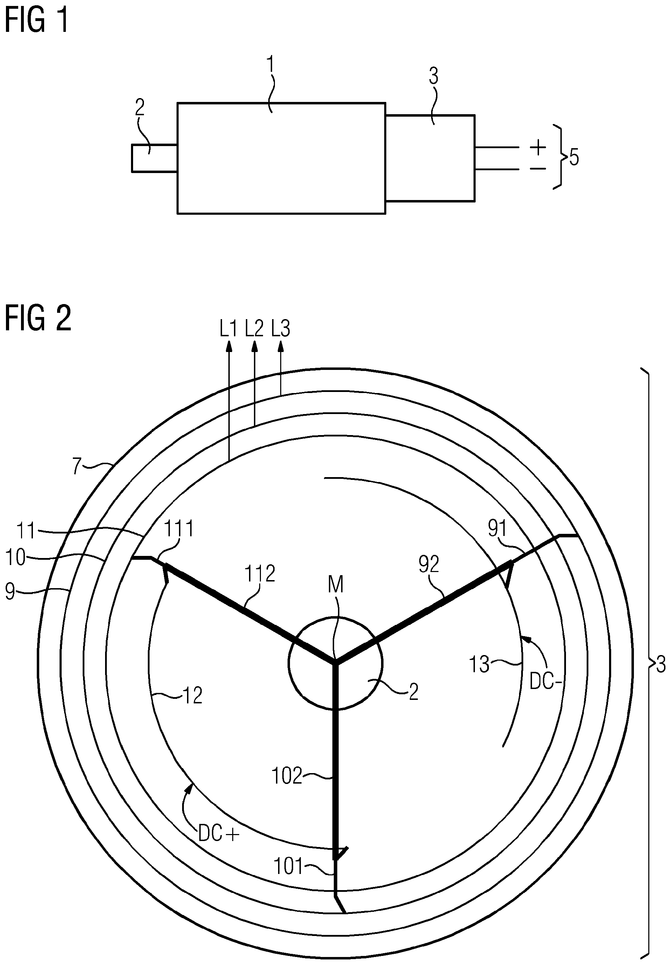

FIG 1 zeigt eine dynamoelektrische rotatorische Maschine, in Form eines Motors.

Der mehrsträngige Motor 1 ist an die erfindungsgemäße mechanische Vorrichtung 3 gekoppelt. Die mechanische Vorrichtung 3 ist in der FIG 1 ein Schleifkontaktschalter, welcher mit Gleichstrom durch die DC-Speisung 5 gespeist wird. In der FIG 1 sind sowohl der Motor 1 als auch der Schleifkontaktschalter 3 mit einer Welle 2 gekoppelt.

FIG 2 zeigt eine erste Ausführung der mechanischen Vorrichtung 3.

Die FIG 2 zeigt die mechanische Vorrichtung 3 ausgeführt als Scheibe bzw. Kontaktscheibe. Die mechanische Vorrichtung 3 ist zur Fixierung an einem Stator einer dynamoelektrischen rotatorischen Maschine geeignet.

Die mechanische Vorrichtung 3 ist in der FIG 2 als Kontaktscheibe ausgeführt, wobei eine Kontaktscheibe eine Ausführung eines Hohlzylinders ist.

Die mechanische Vorrichtung 3 weist einen ersten Abgabebereich 9, einen zweiten Abgabebereich 10 und einen dritten Abgabebereich 11 auf. In der FIG 2 ist der erste Abgabebereich 9 als Schleifbahn für eine erste Phase L1 ausgeführt, der zweite Abgabebereich 10 als Schleifbahn für eine zweite Phase L2 und der dritte Abgabebereich 11 als Schleifbahn für eine dritte Phase L3.

Ferner umfasst die mechanische Vorrichtung 3 in der FIG 2 einen ersten Aufnahmebereich 12 und einen zweiten Aufnahmebereich 13. Die beiden Aufnahmebereiche 12 und 13 liegen auf genau einer Schleifbahn, welche zumindest teilweise einer konzentrisch um einen Mittelpunkt M angeordneten Kreisbahn folgt.

Der erste Aufnahmebereich 12 ist zur Kontaktierung eines Pluspols einer DC-Speisung ausgebildet. Der zweite Aufnahmebereich 13 ist zur Kontaktierung eines Minuspols einer DC-Speisung ausgebildet.

Auch die Schleifbahnen 9, 10, 11 folgen zumindest teilweise einer konzentrisch um einen Mittelpunkt M angeordneten Kreisbahn.

Die FIG 2 zeigt, dass die Kontaktscheibe 7 an die Welle 2 gekoppelt ist. Die Kontaktscheibe 7 ist vorzugsweise fest mit dem Stator verbunden.

Die FIG 2 zeigt ferner ein Verbindungselement 92, ein Verbindungselement 102 und ein Verbindungselement 112.

Ein Kontaktierungselement 91 ist mit dem Verbindungselement 92 verbunden. Ein Kontaktierungselement 92 ist mit dem Verbindungselement 102 verbunden. Ein Kontaktierungselement 111 ist mit dem Verbindungselement 112 verbunden.

Mittels der Verbindungselemente 92, 102 und 112 sind die Kontaktierungselemente 91, 101 und 111 mit der Welle 2 verbindbar.

Bei Rotation der Welle 2 verbindet z. B. das Kontaktierungselement 91 den Abgabebereich 9 mit dem Aufnahmebereich 13 und später den Abgabebereich 9 mit dem Aufnahmebereich 12. In anderen Worten: Das Kontaktierungselement 91 verbindet die Schleifbahn für L1 mit dem Minuspol und später die Schleifbahn für L1 mit dem Pluspol.

Ebenso gilt: Das Kontaktierungselement 101 verbindet die Schleifbahn für L2 mit dem Minuspol und später die Schleifbahn für L2 mit dem Pluspol. Das Kontaktierungselement 111 verbindet die Schleifbahn für L3 mit dem Minuspol und später die Schleifbahn für L3 mit dem Pluspol.

Die Länge der Aufnahmebereiche 12 und 13 auf der Schleifbahn ist so gewählt, dass ein dreiphasiger Wechselstrom gebildet wird.

Mittels der mechanischen Vorrichtung 3, einem Schleifkontaktschalter, kann eine mehrsträngige Statorwicklung gespeist werden.

Vorzugsweise sind die Verbindungselemente als Bürsten, insbesondere Kohlebürsten, ausgeführt.

Wie bereits erläutert, sind die Kontakte 91, 101 und 111 mit der Welle 2 über das Verbindungselement und somit mit dem Rotor verbunden.

Werden die Aufnahmebereiche 12 und 13 mit Gleichspannung kontaktiert, wird durch eine Position des Rotors gesteuert, welcher Abgabebereich welchen Strom bereitstellen kann.

Ein Abgabebereich kann als Kontaktring ausgeführt sein. Ein Aufnahmebereich kann als Kommutierungsring ausgeführt sein.

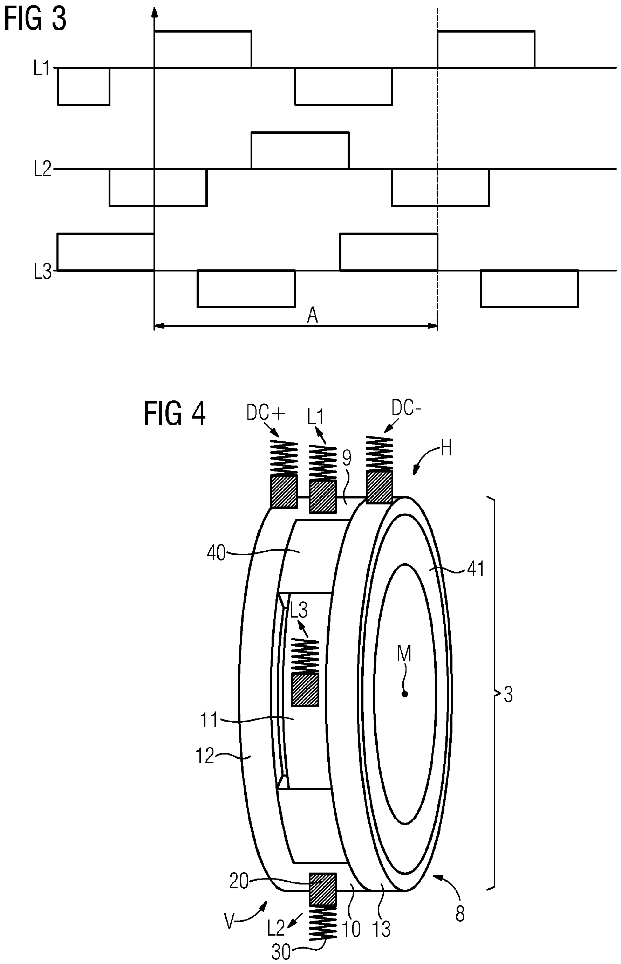

FIG 3 zeigt ein Resultat der Umformung von Gleichstrom in Dreiphasenwechselstrom. FIG 3 zeigt, wie eine dreisträngige Wicklung einer dynamoelektrischen rotatorischen Maschine durch die mechanische Vorrichtung 3 gespeist werden kann, auf Basis von einer Gleichstromspeisung.

Die FIG 3 zeigt die Speisung der drei Stränge L1, L2 und L3, wobei A eine Umdrehung bei einem zweipoligen Motor anzeigt.

In der Figur ist gezeigt, dass die positiven Strombereiche der einzelnen Stränge um 120°C phasenverschoben sind, wie bei einem Dreiphasen-Wechselstrom üblich.

FIG 4 zeigt eine weitere Ausführung der mechanischen Vorrichtung 3.

Die FIG 4 zeigt einen Kommutator mit Schleifkontakten 8, der auf eine Welle aufsteckbar ist. Die mechanische Vorrichtung 3 ist als Hohlzylinder ausgeführt. Die mechanische Vorrichtung 3 weist einen ersten Aufnahmebereich zur Kontaktierung eines Pluspols einer Gleichstromspeisung 12 sowie einen zweiten Aufnahmebereich zur Kontaktierung eines Minuspols einer Gleichstromspeisung 13 auf.

In der FIG 4 ist der erste Aufnahmebereich an einem vorderen axialen Ende V des Hohlzylinders als an einem Außenumfang des Hohlzylinders umlaufende Bahn ausgeführt. In der FIG 4 ist der zweite Aufnahmebereich an einem hinteren axialen Ende H des Hohlzylinders als an dem Außenumfang des Hohlzylinders umlaufende Bahn ausgeführt.

Die FIG 4 zeigt ferner drei Abgabebereiche 9, 10 und 11, welche um 60°C mechanisch (60° mechanisch entspricht 180° elektrisch) am Umfang versetzt angeordnet sind.

Die Abgabebereiche 9 und 10 sind vorteilhaft mit DC+ verbunden, der Abgabebereich 11 mit DC-.

Die FIG 4 zeigt, dass jeder Aufnahmebereich sowie jeder Abgabebereich über einen Kontakt 20 und eine Feder 30 kontaktierbar ist. Der erste Aufnahmebereich 12 und der zweite Aufnahmebereich 13 sind über Kontakt 20 und Feder 30 mit dem speisenden DC-System verbunden. Dieses ist in der FIG 4 mit DC+ und DC- dargestellt.

Die drei Abgabebereiche 9, 10 und 11 sind über Feder 30 und Kontakt 20 mit den Phasen L1, L2 und L3 kontaktierbar, welche die Energieversorgung des Motors darstellen.

Die FIG 4 zeigt eine mechanische Vorrichtung 3, welche für eine dreisträngige dynamoelektrische rotatorische Maschine mit sechs Polen geeignet ist.

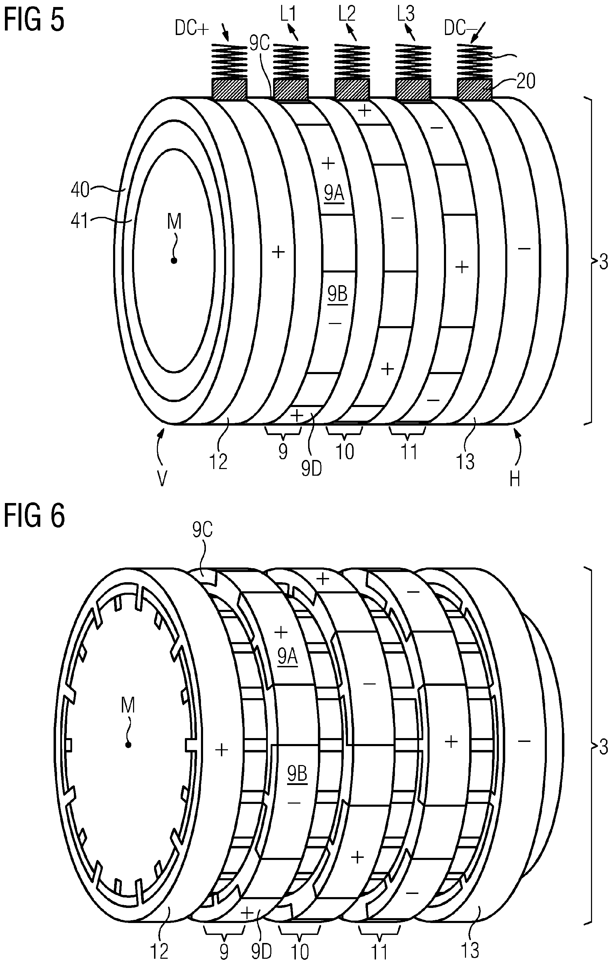

FIG 5 zeigt eine weitere Ausführung der mechanischen Vorrichtung 3.

Die mechanische Vorrichtung 3 ist als Hohlzylinder ausgeführt und mittels des Wellenadapter 41 mit einer Welle einer dynamoelektrischen rotatorischen Maschine koppelbar. Die mechanische Vorrichtung 3 soll bei Kopplung mit einer Welle nicht drehbar gelagert sein. Die FIG 5 zeigt einen Isolator 40. Ferner zeigt die FIG 5 einen ersten Aufnahmebereich 12, einen zweiten Aufnahmebereich 13 sowie drei Abgabebereiche 9, 10 und 11.

Die FIG 5 zeigt, dass jeder Aufnahmebereich sowie jeder Abgabebereich über einen Kontakt 20 und eine Feder 30 kontaktierbar ist. Der erste Aufnahmebereich 12 und der zweite Aufnahmebereich 13 sind über Kontakt 20 und Feder 30 mit dem speisenden DC-System verbunden. Dieses ist in der FIG 5 mit DC+ und DC- dargestellt.

Die FIG 5 zeigt eine mechanische Vorrichtung 3, welche für eine dreisträngige dynamoelektrische rotatorische Maschine mit sechs Polen geeignet ist.

Der erste Abgabebereich 9 ist in der Figur in eine Mehrzahl von Abgabebereichsabschnitten unterteilt. Der zweite Abgabebereich 10 ist in die gleiche Mehrzahl von Abgabebereichsabschnitten unterteilt. Der dritte Abgabebereich 11 ist in die gleiche Mehrzahl von Abgabebereichsabschnitten unterteilt.

Die Anzahl der Abgabebereichsabschnitte entspricht vorzugsweise der Anzahl an Polen einer Statorwicklung der dynamoelektrischen rotatorischen Maschine, wobei ein erster Abgabebereichsabschnitt 9A mit dem ersten Aufnahmebereich 12 verbunden ist, wobei ein benachbarter zweiter Abgabebereichsabschnitt 9B mit dem zweiten Aufnahmebereich 13 verbunden ist. Dies wird in FIG 6 genauer beschrieben.

FIG 6 zeigt eine Ausführung einer internen Verschaltung der in FIG 5 gezeigten Ausführung der mechanischen Vorrichtung.

Der erste Abgabebereichsabschnitt 9A ist mit dem ersten Aufnahmebereich 12 verbunden, der benachbarte zweite Abgabebereichsabschnitt 9B ist mit dem zweiten Aufnahmebereich 13 verbunden. Ein weiterer benachbarter dritter Abgabebereichsabschnitt 9C ist ebenso mit dem zweiten Aufnahmebereich 13.

Ein Abgabebereichsabschnitt 9D ist in der Figur mit dem ersten Aufnahmebereich 12 verbunden. Dieses System ist auf die anderen beiden Schleifbahnen zu übertragen.

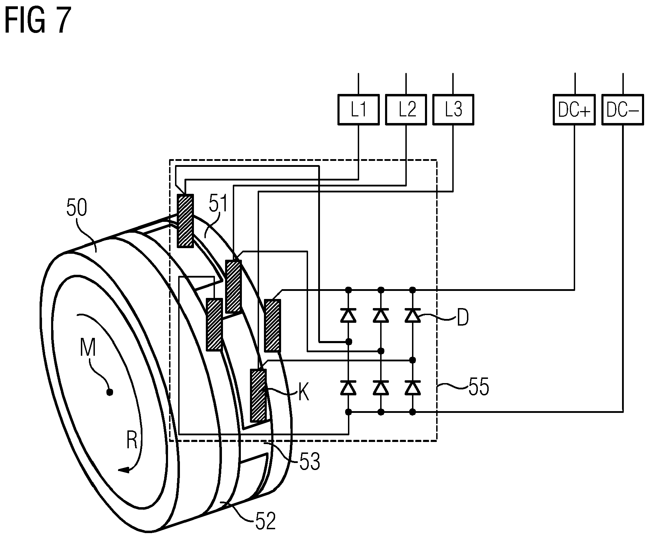

FIG 7 zeigt eine Vorrichtung zur Unterdrückung von Bürstenfeuer bei hoher Strombelastung.

Die in den vorigen Figuren beschriebene mechanische Vorrichtung in verschiedenen Ausführungsbeispielen kann bei hoher Strombelastung Bürstenfeuer entwickeln. Derartige Bürstenfeuer sollen weitgehend unterdrückt werden.

Die FIG 7 zeigt einen Isolationskörper 50 und Schleifbahnen 53, 52 und 51 sowie eine Bewegungsrichtung R. Die FIG 7 zeigt eine Bürstenbrücke 55, die Freilaufdioden D zur Unterdrückung von Bürstenfeuer aufweist. Die Figur zeigt ferner Kontakte K, welche an DC+ oder DC- bzw. L1, L2 oder L3 gekoppelt sind.

Dies hat den Vorteil, dass Bürstenfeuer, die beispielsweise zu hohem Verschleiß führen, unterdrückt werden. Durch die Freilaufdioden D, die in der Bürstenbrücke angeordnet sind, können Freilaufströme abgeleitet werden, ohne dass Funken entstehen.

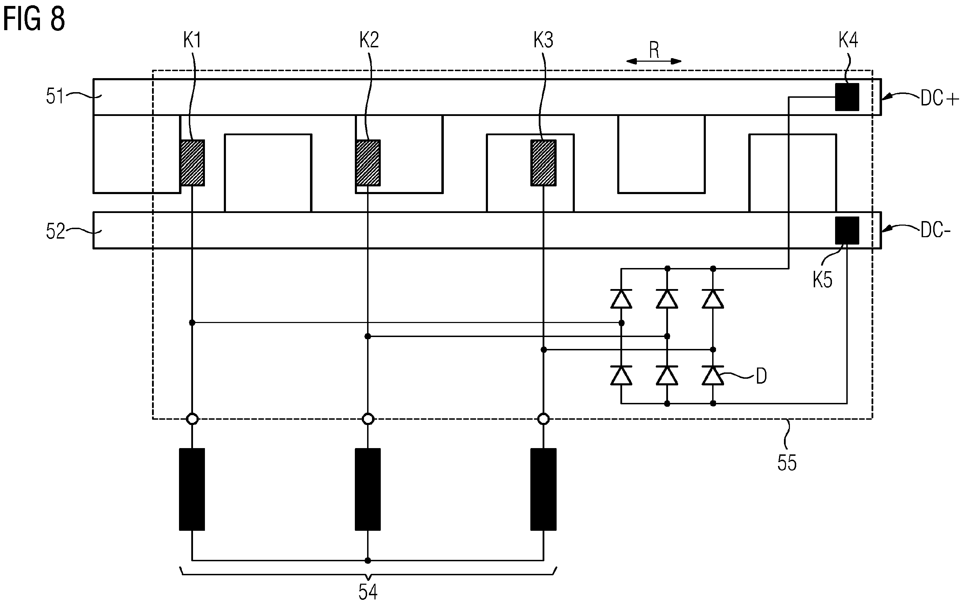

FIG 8 zeigt die Vorrichtung aus FIG 7 in einer anderen Perspektive, sozusagen in ausgerollter Perspektive.

Die FIG 8 zeigt die Schleifbahnen 53, 52 und 51, die Bürstenbrücke 55 und die Freilaufdioden D zur Unterdrückung von Bürstenfeuer. Die Figur zeigt die Statorwicklung in Sternschaltung 54 sowie eine Anordnung der Kontakte K1...K4.

Die Vorrichtung ist für eine sechspolige, dreiphasige Maschine geeignet.

## Patentansprüche

1. Mechanische Vorrichtung (3) zur Umformung von Gleichstrom in Dreiphasenwechselstrom zum Antrieb einer dynamoelektrischen rotatorischen Maschine, aufweisend
- wenigstens eine Kontakteinheit mit wenigstens zwei Aufnahmebereichen (12, 13) zur Aufnahme von elektrischer Energie in Form von Gleichstrom und mit wenigstens drei Abgabebereichen (9, 10, 11) zur Abgabe elektrischer Energie in Form von Wechselstrom,
wobei ein erster Aufnahmebereich zur Kontaktierung eines Pluspols einer Gleichstromspeisung ausgebildet ist,
wobei ein zweiter Aufnahmebereich zur Kontaktierung eines Minuspols einer Gleichstromspeisung ausgebildet ist, wobei ein erster Abgabebereich zur Bereitstellung eines ersten Wechselstroms ausgebildet ist,
wobei ein zweiter Abgabebereich zur Bereitstellung eines zweiten Wechselstroms ausgebildet ist,
wobei ein dritter Abgabebereich zur Bereitstellung eines dritten Wechselstroms ausgebildet ist, und
- wenigstens eine Kontaktierungseinheit zur Aufnahme des Gleichstroms und/oder zur Abgabe des Wechselstroms.

2. Mechanische Vorrichtung (3) nach Anspruch 1, wobei die Kontakteinheit auf eine Welle (2) einer dynamoelektrischen rotatorischen Maschine aufsteckbar ist.

3. Mechanische Vorrichtung (3) nach einem der Ansprüche 1 oder 2, wobei die Kontakteinheit als Hohlzylinder ausgebildet ist.

4. Mechanische Vorrichtung (3) nach einem der Ansprüche 1 bis 3, wobei der erste und/oder der zweite Aufnahmebereich (12, 13) auf wenigstens einer wenigstens im Wesentlichen konzentrisch um einen Mittelpunkt (M) angeordneten Schleifbahn liegt.

5. Mechanische Vorrichtung (3) nach einem der Ansprüche 1 bis 4, wobei der erste und/oder der zweite und/oder der dritte Abgabebereich (9, 10, 11) auf wenigstens einer wenigstens im Wesentlichen konzentrisch um den Mittelpunkt (M) angeordneten Schleifbahn liegt.

6. Mechanische Vorrichtung (3) nach einem der Ansprüche 1 bis 5, wobei die Kontakteinheit als Scheibe ausgebildet ist.

7. Mechanische Vorrichtung (3) nach einem der Ansprüche 1 bis 6, wobei der erste Abgabebereich (9) auf einer ersten Schleifbahn liegt, wobei der zweite Abgabebereich (10) auf einer zweiten Schleifbahn liegt, wobei der dritte Abgabebereich (11) auf einer dritten Schleifbahn liegt.

8. Mechanische Vorrichtung (3) nach einem der Ansprüche 1 bis 7, wobei der erste und der zweite Aufnahmebereich auf genau einer vierten Schleifbahn liegen, wobei der erste Aufnahmebereich auf einem ersten Abschnitt der vierten Schleifbahn liegt, wobei der zweite Aufnahmebereich auf einem zweiten Abschnitt der vierten Schleifbahn liegt.

9. Mechanische Vorrichtung (3) nach einem der Ansprüche 1 bis 8, wobei die Kontaktierungseinheit zur Verbindung mit der Welle der dynamoelektrischen rotatorischen Maschine ausgebildet ist, wobei die Kontaktierungseinheit wenigstens drei Kontaktierungselemente aufweist,
wobei ein erstes Kontaktierungselement bei Rotation der Welle der ersten Schleifbahn folgend ausgeführt ist, derart, dass das erste Kontaktierungselement den ersten Abgabebereich abwechselnd mit dem ersten Aufnahmebereich und mit dem zweiten Aufnahmebereich verbindet,
wobei ein zweites Kontaktierungselement bei Rotation der Welle der zweiten Schleifbahn folgend ausgeführt ist, derart, dass das zweite Kontaktierungselement den zweiten Abgabebereich abwechselnd mit dem ersten Aufnahmebereich und mit dem zweiten Aufnahmebereich verbindet,
wobei ein drittes Kontaktierungselement bei Rotation der Welle der dritten Schleifbahn folgend ausgeführt ist, derart, dass das dritte Kontaktierungselement den dritten Abgabebereich abwechselnd mit dem ersten Aufnahmebereich und mit dem zweiten Aufnahmebereich verbindet.

10. Mechanische Vorrichtung (3) nach einem der Ansprüche 1 bis 5, wobei der erste Aufnahmebereich auf einer ersten Aufnahmeschleifbahn liegt, wobei die erste Aufnahmeschleifbahn an einem Außenumfang der als Hohlzylinder ausgebildeten Kontakteinheit angeordnet ist, wobei der zweite Aufnahmebereich auf einer zweiten Aufnahmeschleifbahn liegt, wobei die zweite Aufnahmeschleifbahn an dem Außenumfang der Kontakteinheit angeordnet ist.

11. Mechanische Vorrichtung (3) nach einem der Ansprüche 1 bis 5 oder 10, wobei der erste Abgabebereich und der zweite Abgabebereich und der dritte Abgabebereich auf genau einer Abgabeschleifbahn liegen, wobei die Abgabeschleifbahn an dem Außenumfang der als Hohlzylinder ausgebildeten Kontakteinheit angeordnet ist,
wobei der erste Abgabebereich auf einem ersten Abschnitt der Abgabeschleifbahn liegt, wobei der zweite Abgabebereich auf einem zweiten Abschnitt der Abgabeschleifbahn liegt, wobei der dritte Abgabebereich auf einem dritten Abschnitt der Abgabeschleifbahn liegt.

12. Mechanische Vorrichtung (3) nach einem der Ansprüche 1 bis 5 oder 10, wobei der erste Abgabebereich auf einer ersten Abgabeschleifbahn und der zweite Abgabebereich auf einer zweiten Abgabeschleifbahn und der dritte Abgabebereich auf einer dritten Abgabeschleifbahn liegen, wobei die erste Abgabeschleifbahn und die zweite Abgabeschleifbahn und die dritte Abgabeschleifbahn an dem Außenumfang der als Hohlzylinder ausgebildeten Kontakteinheit angeordnet sind.

13. Mechanische Vorrichtung (3) nach Anspruch 12, wobei der erste Abgabebereich in eine Mehrzahl von Abgabebereichsabschnitten unterteilt ist, wobei der zweite Abgabebereich in die Mehrzahl von Abgabebereichsabschnitten unterteilt ist, wobei der dritte Abgabebereich in die Mehrzahl von Abgabebereichsabschnitten unterteilt ist.

14. Mechanische Vorrichtung (3) nach Anspruch 13, wobei die Mehrzahl der Abgabebereichsabschnitte einer Anzahl an Polen einer Statorwicklung der dynamoelektrischen rotatorischen Maschine entspricht, wobei ein erster Abgabebereichsabschnitt mit dem ersten Aufnahmebereich verbunden ist, wobei ein benachbarter zweiter Abgabebereichsabschnitt mit dem zweiten Aufnahmebereich verbunden ist.

15. Dynamoelektrische rotatorische Maschine aufweisend eine mechanische Vorrichtung (3) nach einem der Ansprüche 1 bis 14.
